(19) Europäisches Patentamt
European Patent Office
Office européen des brevets

(11) Veröffentlichungsnummer: **0 198 226**
**A2**

(12) # EUROPÄISCHE PATENTANMELDUNG

(21) Anmeldenummer: **86103388.4**

(22) Anmeldetag: **13.03.86**

(51) Int. Cl.⁴: **C08G 59/42**, C08G 59/58, C09D 3/58

(30) Priorität: **02.04.85 DE 3511998**

(43) Veröffentlichungstag der Anmeldung: **22.10.86 Patentblatt 86/43**

(84) Benannte Vertragsstaaten: **DE FR GB IT NL**

(71) Anmelder: **HÜLS AKTIENGESELLSCHAFT**
**Patentabteilung / PB 15 - Postfach 13 20**
**D-4370 Marl 1(DE)**

(72) Erfinder: **Olbrich, Jürgen**
**Am Gecksbach 64**
**D-4270 Dorsten 11(DE)**

(54) **Härter für pulverförmige Überzugsmittel auf der Basis von Epoxyharzen.**

(57) Härter erhalten durch Neutralisation einer Tetracarbonsäure eines teilhydrierten Naphthalins, Anthracens oder Phenanthrens mit einem cyclischen Amidin für epoxigruppenhaltige pulverförmige Überzugsmittel zur Herstellung matter Überzüge.

EP 0 198 226 A2

# Härter für pulverförmige Überzugsmittel auf der Basis von Epoxiharzen

Gegenstand der Erfindung sind Härter erhalten durch Neutralisation einer Polycarbonsäure mit einem cyclischen Amidin für pulverförmige Überzugsmittel auf der Basis von Epoxiharzen als Bindemittel.

Insbesondere im Industrielacksektor besteht ein großer Bedarf an Pulverlacken zur Herstellung matter Überzüge. Die Gründe hierfür sind überwiegend praktischer Natur. Strukturierte bzw. matte Oberflächen erfordern ein weitaus geringeres Maß an Reinigung als glänzende Oberflächen. Darüber hinaus ist es aus sicherheitstechnischen Gründen notwendig, stark reflektierende Oberflächen zu vermeiden.

Um den gewünschten Effekt zu erreichen, sind eine Reihe von Maßnahmen bekannt geworden. Für die Herstellung von matten Überzügen auf Basis von Epoxiharzen als Bindemittel hat sich die Verwendung von speziellen Härtern als eine günstige Arbeitsweise (DE-PS 23 24 696) herausgestellt. Nachteil des hier beschriebenen Verfahrens ist, daß Ungleichmäßigkeiten der Substratoberfläche sichtbar bleiben.

Aufgabe der vorliegenden Erfindung war es, unter Vermeidung der Nachteile des Standes der Technik Härter für pulverförmige Überzugsmittel zu entwickeln, die auch bei problematischen Substratoberflächen zu matten Überzügen mit guten optischen Eigenschaften führen. Wesentlich bei der Lösung der Aufgabe war es, daß sich die lacktechnischen Eigenschaften der Überzüge dabei zumindest nicht verschlechtern.

Diese Aufgabe wurde durch einen Härter gelöst, indem 1 Mol einer Tetracarbonsäure eines teilhydrierten Naphthalins, Anthracens oder Phenanthrens mit mindestens 1 Mol eines cyclischen Amidins neutralisiert worden ist.

Als Tetracarbonsäuren kommen z. B. Verbindungen der nachstehenden allgemeinen Formeln infrage:

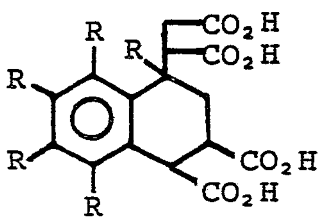

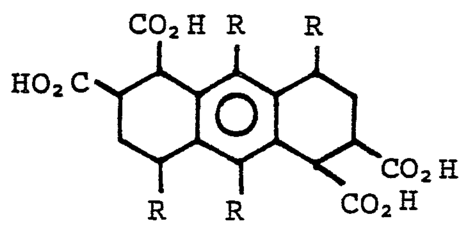

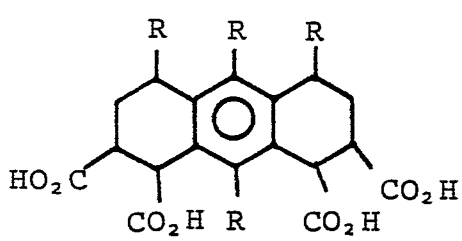

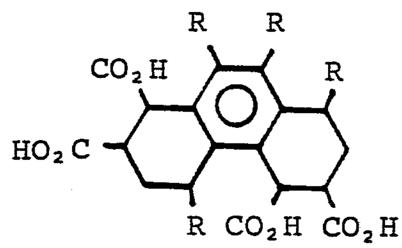

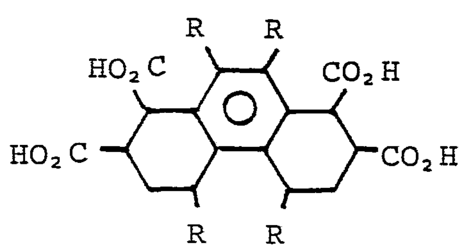

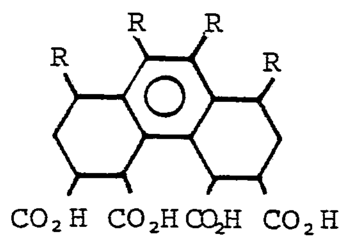

Die als R bezeichneten Substituenten können unabhängig voneinander ein Wasserstoffatom oder einen Alkylrest mit 1 bis 4 C-Atomen bedeuten. Als Beispiel seien 3.4-Dicarboxy-1.2.3.4-tetrahydro-1-naphthalinbernsteinsäure, 3.4-Dicarboxy-1-methyl-1.2.3.4-tetrahydro-1-naphthalinbernsteinsäure und 3.4.7.8-tetracarboxy-1.2.3.4.5.6.7.8-octahydrophenanthren genannt.

Die Herstellung derartiger Tetracarbonsäuren ist bekannt (US-PS 3 769 304, DE-OS 34 35 429). Als Beispiel für eine Herstellungsmethode sei die Addition von 2 Mol Maleinsäureanhydrid an 1 Mol eines ggf. kern-oder seitenkettensubstituierten Vinyloder Divinylbenzols -bei anschließender Hydrolyse -genannt.

Zur Neutralisation der Tetracarbonsäuren werden cyclische Amidine eingesetzt. Als cyclische Amidine eignen sich insbesondere Imidazoline oder Tetrahydropyrimidine.

Als Imidazoline werden Verbindungen der allgemeinen Formel

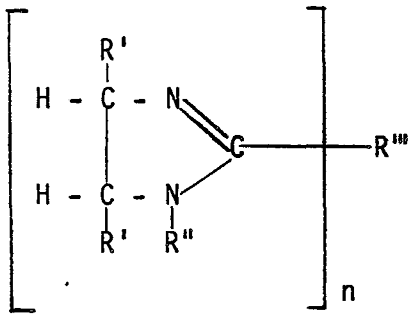

(A)

verwendet, in der

R' unabhängig voneinander ein Wasserstoffatom, einen Alkylrest mit 1 bis 6 C-Atomen, einen Cycloalkylrest mit 5 bis 10 C-Atomen, einen Aralkylrest mit 7 bis 12 C-Atomen, einen Arylrest mit 6 bis 15 C-Atomen oder einen heterocyclischen Rest mit 5 bis 10 C-Atomen und 1 bis 2 Sauerstoff-, Stickstoff- und/oder Schwefelatomen,

R" ein Wasserstoffatom, ein Alkyl-oder Arylrest -(wie unter R' definiert), ein Cycloalkylrest mit 5 bis 10 C-Atomen oder ein heterocyclischer Rest mit 5 bis 10 C-Atomen und 1 bis 2 Sauerstoff-, Stickstoff- und/oder Schwefelatomen,

R" einen Alkylenrest mit 1 bis 6 C-Atomen oder einen Arylenrest mit 6 bis 15 C-Atomen, wobei diese jeweils durch Alkyl-, Cycloalkyl-oder Arylreste (wie für R bzw. R" definiert) substituiert sein können,

n 1 oder 2

bedeuten und für den Fall n = 1 auch ein Wasserstoffatom bedeuten kann.

Bevorzugte Imidazoline der allgemeinen Formel (A) sind z. B. 2-Phenyl-imidazolin, 2-Phenyl-4-methyl-imidazolin, 2-(m-Tolyl)-4-methyl-imidazolin, 2-(m-Pyridyl)-imidazolin, 1,4-Tetramethylen-bis-(4-methyl-imidazolin), 2-Methyl-imidazolin, 2,4-Dimethylimidazolin, 2-Ethyl-imidazolin, 2-Ethyl-4-methyl-imidazolin, 2-Benzyl-imidazolin, 2-(o-Tolyl)-imidazolin, 2-(p-Tolyl)-imidazolin, Tetramethylen-bis-(imidazolin), 1,1,3-Trimethyl-1,4-tetramethylen-bis-imidazolin, 1,1,3-Trimethyl-1,4-tetramethylen-bis-(4-methyl-imidazolin), 1,3,3-Trimethyl-1,4-tetramethylen-bis-(4-methyl-imidazolin), 1,2-Phenylen-bis-imidazolin, 1,3-Phenylen-bis-(4-methyl-imidazolin). Es können auch Gemische der Imidazolin-Derivate eingesetzt werden; besonders bevorzugt werden 2-Phenyl-imidazolin und 2-Methyl-imidazolin.

Es können auch Gemische der genannten Imidazoline eingesetzt werden.

Als cyclische Amidine können auch Tetrahydropyrimidine der allgemeinen Formel

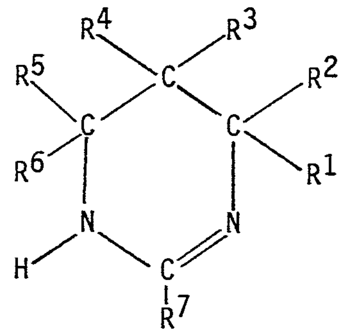

(B)

eingesetzt werden, in der

$R^1$ bis $R^7$ unabhängig voneinander ein Wasserstoffatom, einen Alkylrest mit 1 bis 6 C-Atomen, einen Cycloalkylrest mit 5 bis 10 C-Atomen, einen Aralkylrest mit 7 bis 12 C-Atomen und einen Arylrest mit 6 bis 15 C-Atomen bedeuten, wobei auch zwei geminale und vicinale Substituenten zusammen mit dem Kohlenstoffatom, an dem sie sitzen, einen cycloaliphatischen Ring mit 5 bis 6 C-Atomen bilden können.

Bevorzugte Tetrahydropyrimidine sind z. B. 2-Methyl-tetrahydropyrimidin, 2.4-, 2.5-und 2.6-Dimethyltetrahydropyrimidin, 2-Ethyl-tetrahydropyrimidin, 2-Ethyl-4-methyl-tetrahydropyrimidin, 2-Benzyl-tetrahydropyrimidin, 2-Phenyl-tetrahydropyrimidin, 2-Phenyl-4-methyl-, 5-methyl-und -6-methyl-tetrahydropyrimidin, 2.4-Diaza-3-phenyl-7.9.9-und -7.7.9-trimethyl-bicyclo(4.3.0)-nonen-2, 2.4-Diaza-3-methyl-7.9.9-und 7.7.9-trimethylbicyclo-(4.3.0)-nonen-2 sowie Gemische dieser Tetrahydropyrimidine.

Die Herstellung der erfindungsgemäßen Härter erfolgt durch Umsetzen der Tetracarbonsäure mit dem cyclischen Amidin. Das Mischungsverhältnis der beiden Komponenten wird so gewählt, daß 1 Mol Tetracarbonsäure mit mindestens 1 Mol, vorzugsweise mit 1 bis 2 Mol, eines cyclischen Amidins neutralisiert wird. Die Tetracarbonsäure kann gegebenenfalls auch vollständig neutralisiert werden.

Die Neutralisation erfolgt bei 50 bis 60 °C in einer Lösung der Komponenten. Diese Arbeitsweise ist bekannt und wird nicht beansprucht.

Die einsetzbaren Epoxiharze weisen im allgemeinen durchschnittlich mehr als eine Epoxidgruppe pro Molekül auf. Sie haben einen Schmelzpunkt über 40 °C. Die Epoxiharze können sowohl gesättigt als auch ungesättigt, aliphatisch, cycloaliphatisch, araliphatisch oder heterocyclisch sein. Im einzelnen handelt es sich um

-Epoxide mehrfach ungesättigter Kohlenwasserstoffe, wie z.B. Vinylcyclohexen, Dicyclopentadien, Cyclohexadien-(1.3) und -(1.4), Cyclododecadiene und -triene, Isopren, Hexadien-(1.5), Butadien, Polybutadiene, Divinylbenzole und dergleichen,

-Epoxiether mehrwertiger Alkohole, wie z. B. Ethylen-, Propylen-und Butylenglykol, Glycerin, Pentaerythrit, Sorbit, Polyvinylalkohole und Thiodiglykole,

-Epoxiether mehrwertiger Phenole, wie Resorcin, Hydrochinon, Bis-(4-hydroxyphenol)-methan, Bis-(4-hydroxy-3.5-dichlorphenyl)-methan, 1.1-Bis-(4-hydroxyphenyl)-ethan, 2.2-Bis-(4-hydroxyphenyl)-propan, 2.2-Bis-(4-hydroxy-3-methylphenyl)-propan, 2.2-Bis-(4-hydroxy3.5.5-trichlorphenyl)-propan, Bis-(4-hydroxyphenyl)-phenylmethan, Bis-(4-hydroxyphenyl)-diphenylmethan, Bis-(4-hydroxyphenyl)-cyclo-hexylmethan, 4.4'-Dihydroxydiphenyl, 2.2'-Dihydroxydiphenyl,

-N-haltige Epoxide, wie N.N-Diglycidylanilin, N.N'-Dimethyldiglycidyl-4.4'-diaminodiphenylmethan, Triglycidylisocyanurat.

Als besonders geeignet haben sich Epoxide auf Bisphenol A-Basis mit einem Epoxid-Äquivalent von 500 bis 2 000 und einem Schmelzpunkt von 70 bis 140 °C erwiesen.

Bei der Herstellung der pulverförmigen Überzugsmittel können weiterhin übliche Zusätze, wie Verlaufmittel, Pigmente, Farbstoffe, Füllstoffe, Katalysatoren, Thixotropiermittel, UV-und Oxidationsstabilisatoren, Verwendung finden. Die Menge dieser Zusätze kann, bezogen auf die Menge des Bindemittels, innerhalb eines weiten Bereichs - schwanken.

Die Herstellung der Überzugsmittel erfolgt beispielsweise in der Weise, daß man die einzelnen Komponenten (Epoxiharze, Härter und ggf. Zusätze) mahlt, mischt und bei 90 bis 110 °C extrudiert. Nach dem Extrudieren wird abgekühlt und auf eine Korngröße kleiner als 100 µm gemahlen.

Die Applikation auf die zu überziehenden Substrate kann nach bekannten Methoden erfolgen, z. B. durch elektrostatisches Pulverspritzen, Wirbelsintern oder elektrostatisches Wirbelsintern. An-

schließend wird das aufgetragene Überzugsmittel 5 bis 35 min im Temperaturbereich zwischen 160 bis 240 °C, vorzugsweise 10 bis 20 min zwischen 180 bis 220 °C, ausgehärtet.

Zur Beschichtung mit den erfindungsgemäßen pulverförmigen Überzugsmitteln eigenen sich alle Substrate, die bei den angegebenen Härtungstemperaturen beständig, z.B. Metalle, Glas, Keramik oder Kunststoff, sind.

Die mit Hilfe der erfindungsgemäßen Härter hergestellten Überzüge weisen eine gleichmäßige Struktur bzw. einen matten Glanz auf. Gemäß der Bestimmungsmethode nach Gardner (60°) können Glanzgrade im Bereich von 6 bis 25 erreicht werden. In unerwarteter Weise bleiben andere lacktechnische Eigenschaften auf hohem Niveau. -

Die lacktechnischen Eigenschaften wurden mit Hilfe der nachstehenden Prüfmethoden bestimmt:

Tiefung nach Erichsen in mm (DIN 53 156)

Kugelschlagprüfung nach Gardner (ASTM D 2794)

Gitterschnittprüfung (DIN 53 151)

Glanzgrad nach Gardner bei 60° (ASTM D 523)

Beispiele

Herstellung der Überzugsmittel

Die verwendeten Epoxiharze wurden mit den erfindungsgemäßen Härtern, den Pigmenten und den Zusatzstoffen, wie z. B. Verlaufmittel, in den unten angegebenen Gewichtsverhältnissen gemischt, extrudiert und anschließend gemahlen. Der Teilchendurchmesser der Pulverlackbestandteile lag bei < 100 µ. Die Häufigkeitsverteilung der Teilchendurchmesser besaß im Bereich von 30 bis 50 µ ein Maximum. Diese Überzugs mittel wurden durch elektrostatisches Pulverspritzen auf entfettete Stahlbleche (1 mm) aufgebracht und anschließend bei den angegebenen Temperaturen und Zeiten ausgehärtet. Die Eigenschaften der erhaltenen Überzüge wurden den nachstehenden Prüfungen unterworfen.

Beispiel 1

Mit 1 Mol 3.4-Dicarboxy-1.2.3.4-tetrahydro-1-naphthalinbernsteinsäure wurde bei 60 °C eine gesättigte methanolische Lösung (ca. 300 ml Methanol) hergestellt. Diese wurde dann in der Hitze mit einer ebenfalls bei 60 °C hergestellten, gesättigten methanolischen Lösung aus 1 Mol 2-Phenylimidazolin (ca. 40 ml $CH_3OH$) versetzt. Die erhaltene Lösung wurde noch 4 Std. unter Rückfluß gekocht und dann zur Trockne eingeengt.

Der Härter wurde mit Titandioxid, Epoxidharz und Verlaufmittel in nachstehendem Verhältnis zu einem pulverförmigen Überzugsmittel verarbeitet.

Das erhaltene Überzugsmittel wird, wie oben beschrieben, auf Stahlbleche appliziert.

| | | |
|---|---|---|
| 5 | Gew.-% | Härter |
| 54.5 | Gew.-% | Epoxidharz (EPIKOTE$^R$ 1004) |
| 40 | Gew.-% | $TiO_2$ |
| 0.5 | Gew.-% | Fließmittel auf Polyacrylat-Basis (MODAFLOW$^R$) |

Die Versuchsergebnisse können der Tabelle entnommen werden.

Beispiel 2

Mit 1 Mol 3.4-Dicarboxy-1.2.3.4-tetrahydro-1-naphthalinbernsteinsäure wurde bei 60 °C eine gesättigte methanolische Lösung (ca. 300 ml Methanol) hergestellt. Diese wurde dann in der Hitze mit einer ebenfalls bei 60 °C hergestellten, gesättigten methanolischen Lösung aus 2 Mol 2-Phenylimidazolin (ca. 80 ml Methanol) versetzt. Die erhaltene Suspension wurde noch 4 Std. unter Rückfluß gekocht und dann zur Trockne eingeengt.

Die Herstellung und Verarbeitung des pulverförmigen Überzugsmittels erfolgte analog Beispiel 1.

Die Versuchsergebnisse können der Tabelle entnommen werden.

Tabelle

| Bei-spiel | Einbrennbedingungen /min/ / /°C/ | Schichtdicke /µm/ | Tiefung /mm/ | Kugelschlag n. Gardner /in lb/ | Gitterschnitt | Glanz (60°) |
|---|---|---|---|---|---|---|
| 1 | 10/200 | 60 | 7.1 | 80 | 0 | 7 |
| 2 | 10/200 | 55 - 65 | 7.7 | 80 | 0 | 25 |

**Ansprüche**

1. Härter erhalten durch Neutralisation einer Polycarbonsäure mit einem cyclischen Amidin für pulverförmige Überzugsmittel auf der Basis von Epoxiharzen als Bindemittel,

dadurch gekennzeichnet,

daß die Polycarbonsäure eine Tetracarbonsäure eines teilhydrierten Naphthalins, Anthracens oder Phenanthrens ist und daß 1 Mol Polycarbonsäure mit mindestens 1 Mol eines cyclischen Amidins neutralisiert worden ist.

2. Härter gemäß Anspruch 1,

dadurch gekennzeichnet,

daß die Polycarbonsäure eine Tetracarbonsäure eines Tetrahydronaphthalins ist.

3. Härter gemäß den Ansprüchen 1 und 2,

dadurch gekennzeichnet,

daß zur Neutralisation ein gegebenenfalls substituiertes Imidazolin eingesetzt worden ist.

4. Härter gemäß den Ansprüchen 1 bis 3,

dadurch gekennzeichnet,

daß 1 Mol der Polycarbonsäure mit 1 bis 2 Mol cyclischem Amidin neutralisiert worden ist.